Europäisches Patentamt

European Patent Office

Office européen des brevets

(19)

(11) **EP 1 099 724 A2**

(12) ## EUROPÄISCHE PATENTANMELDUNG

(43) Veröffentlichungstag:
16.05.2001 Patentblatt 2001/20

(51) Int Cl.⁷: **C08K 3/30**, C08K 3/34,
C08L 95/00

(21) Anmeldenummer: 00124272.6

(22) Anmeldetag: 13.11.2000

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **13.11.1999 DE 19954642**

(71) Anmelder: **PCI Augsburg GmbH**
**86159 Augsburg (DE)**

(72) Erfinder:
• **Bröcher, Markus, Dr.**
**86159 Augsburg (DE)**

• **Adlag, Barbara**
**86165 Augsburg (DE)**
• **Banik, Dieter**
**86343 Königsbrunn (DE)**
• **Wache, Steffen, Dr.**
**86405 Erlingen (DE)**
• **Huber, Manfred**
**86179 Augsburg (DE)**

(74) Vertreter: **HOFFMANN - EITLE**
**Patent- und Rechtsanwälte**
**Arabellastrasse 4**
**81925 München (DE)**

(54) **Wässrige, einkomponentige Bitumenformulierung, Vefahren zu ihrer Herstellung und deren Verwendung**

(57) Beschrieben wird eine wässrige, einkomponentige Bitumenformulierung, die als Stabilisierungsmittel der Bitumen-Komponente Ettringit oder/und dessen Vorläufersubstanzen enthält. Besonders bewährt haben sich Bitumenformulierungen, die jeweils bezogen auf den Feststoffgehalt der Bitumenformulierung a) 20 bis 79,5 Gew.-% Bitumen(-Mischung), b) 0,5 bis 60 Gew.-% der Ettringit-Komponente, c) 20 bis 79,5 Gew.-% Wasser und darüber hinaus 0 bis 10 Gew.-% eines Formulierungshilfsmittels als Komponente d) enthalten. Typische Formulierungshilfsmittel sind u. a. sulfonierte Naphthalin- oder Melamin- oder Maleinsäurepolymere-Kondensationsprodukte. Die Herstellung dieser Bitumenformulierung erfolgt durch Zugabe der Komponente a) bei Temperaturen von 100 bis 150 °C zu einer wässrigen Zubereitung der Komponente b) in geeigneten Rührgeräten, wobei das fakultative Formulierungshilfsmittel völlig unabhängig vom Zeitpunkt der Zugabe zugesetzt werden kann. Verwendung finden die beanspruchten Bitumenformulierungen als Bitumendickbeschichtungen, die ggf. weitere qualitätsverbessernde Zusätze enthalten können und die vorwiegend zum Abdichten von Bauteilen gegenüber Bodenfeuchte und/oder (nicht-)drückendem Wasser eingesetzt werden oder für Binde-, Klebe-, Verfestigungs- und Isoliermaterialien. Die mit der Bitumenformulierung hergestellten Produkte zeichnen sich durch eine beschleunigte Filmbildung und das schnelle Erreichen ihrer vollen Funktionsfähigkeit aus.

EP 1 099 724 A2

## Beschreibung

Technisches Gebiet

Die vorliegende Erfindung betrifft eine wässrige, einkomponentige Bitumenformulierung, ein Verfahren zu ihrer Herstellung sowie deren Verwendung.

Stand der Technik

Spezielle Bitumenformulierungen, insbesondere Bitumendickbeschichtungen zum Abdichten von Bauteilen gegen Bodenfeuchte sowie drückendes und nichtdrückendes Wasser, sind bestens bekannt, wobei sich zweikomponentige Dickbeschichtungen in der Praxis besonders bewährt haben (vgl. DE-OS 43 30 399). Diese Systeme bestehen üblicherweise aus einer Basiskomponente, deren Hauptbestandteil eine anionische Bitumenemulsion darstellt, sowie einer in der Regel pulverförmigen Härterkomponente, wobei als Härter eine Mischung aus Quarzsand und Portlandzement und/oder Tonerdeschmelzzement eingesetzt wird. Diese zweikomponentigen Bitumendickbeschichtungen müssen vor der jeweiligen Anwendung aufwendig angemischt werden, bevor es durch Wasserverdunstung und/oder die Freisetzung von mehrwertigen Ionen zum Brechen der Bitumenemulsion und damit zum Härten und Verfilmen der Bitumendickbeschichtung kommt. Durch das gezielte Brechen der Emulsion ist die Verarbeitungszeit solcher zweikomponentiger Materialien limitiert. Zweikomponentige Bitumendickbeschichtungen erreichen ihre Funktionsfähigkeit im allgemeinen nach 2 bis 3 Tagen.

Neben zweikomponentigen Bitumendickbeschichtungen gibt es auch noch einkomponentige Systeme. Einkomponentige Bitumendickbeschichtungen härten und verfilmen rein physikalisch durch Verdunsten von Wasser. Dieser Vorgang dauert im Vergleich zu zweikomponentigen Bitumendickbeschichtungen länger, allerdings entfällt der aufwendige Anmischvorgang. Ihre volle Funktionsfähigkeit erreichen einkomponentige Bitumendickbeschichtungen in der Regel erst nach 4 bis 7 Tagen, was einen wesentlichen Nachteil dieser Systeme darstellt.

Darstellung der Erfindung

Aus den beschriebenen Nachteilen des Standes der Technik hat sich daher die Aufgabe gestellt, eine wässrige, einkomponentige Bitumenformulierung zu entwickeln, die schon nach kurzer Zeit ihre volle Funktionsfähigkeit erreicht. Die Aufgabe wurde erfindungsgemäß durch eine Bitumenformulierung gelöst, die als Stabilisierungsmittel der Bitumen-Komponente Ettringit oder/und dessen Vorläufersubstanzen, d. h. Ettringitbildner enthält.

Unter Ettringit im Sinne der vorliegenden Anmeldung ist vorzugsweise eine Verbindung der Formel (1):

$$[(M1)_3(M2)(OH)_6.12H_2O]_2.X_X.yH_2O$$

zu verstehen, wobei Abweichungen der Stöchiometrie im %-Bereich eingeschlossen sind, solange die für Ettringit charakteristischen Eigenschaften erhalten bleiben.

In der obigen Formel (1) bezeichnet

M1 mindestens ein zweiwertiges Ettringit bildendes Kation;
M2 mindestens ein dreiwertiges oder vierwertiges Kation ausgewählt aus $Al^{3+}$, $Fe^{3+}$, $Mn^{3+}$, $Cr^{3+}$, $Ti^{3+}$ oder $Si^{4+}$;
X mindestens ein einwertiges oder zweiwertiges Anion,
x den stöchiometrischen Faktor, der sich nach der Wertigkeit des oder der Anionen/Kationen richtet und die Ladungsneutralität der Verbindung gewährleistet (er ist vorzugsweise 3-8); und
y die Zahl der gegebenenfalls zusätzlich vorhandenen Kristallwassermoleküle.

Bevorzugte Ausführungsformen der Formel (1) können wie folgt beschrieben werden:

- M1 ist vorzugsweise $Ca^{2+}$ oder $Sr^{2+}$, insbesondere $Ca^{2+'}$
- M2 ist vorzugsweise $Al^{3+}$, $Fe^{3+}$, und/oder $Si^{4+}$, insbesondere $Al^{3+}$ und/oder $Si^{4+}$;
- X ist vorzugsweise Hydroxyl, Chlorid, Sulfat oder Carbonat. X ist besonders bevorzugt Sulfat, das gegebenenfalls teilweise durch Hydroxyl, Chlorid oder Carbonat ersetzt werden kann.
- y hat vorzugsweise den Wert $y \leq 2$ (bei y=2 enthält die Ettringitstruktur 32 Moleküle Wasser pro Formeleinheit).

Wenn die obige Formel (1) als Metallatom M2 nur Si-Atome enthält, ergibt sich die folgende stöchiometrische Summenformel (2) :

$$[(M1)_3(Si)(OH)_6.12H_2O]_2.X_{4-8}.yH_2O,$$

die sich zu $(M1)3(Si)(OH)_6.12H_2O.X_{2-4}.(y/2\ H_2O)$ umschreiben lässt. Ein Beispiel für ein Verbindung, die unter Formel (2) fällt, ist $Ca_3\ [Si\ (OH)_6.12H_2O]\ (CO_3)\ (SO_4)$.

Wird M2 dagegen nur aus dreiwertigen Metallatomen ausgewählt, ergibt sich die Formel (3):

$$[\ (M1)_3(M2)(OH)_6.12H_2O]_2.X_{3-6}.yH_2O.$$

Beim teilweisen Ersatz des Sulfats (Mischkristallbildung) in der Formel (3) können von 3 Sulfat bis zu 2 Sulfat durch Carbonat und bis zu 1,5 Sulfat durch OH ersetzt werden. Ein bevorzugtes Beispiel der Formel (3) ist

$$[Ca_3Al(OH)_6.12H_2O]_2.\ (SO_4)_3.yH_2O\ (y{\leq}2,\ \text{insbesondere 0 oder 2})$$

Kristallines, mikrokristallines und amorphes Ettringit fallen sämtlich unter "Ettringit" im Sinne der vorliegenden Anmeldung. Ettringitbildner sind solche Substanzen, die zusammen genommen sämtliche in Ettringit enthaltenen Elemente in solchen Mengenverhältnissen enthalten, dass sie gemeinsam zur Bildung von Ettringit im obigen Sinne in der Lage sind.

Überraschenderweise hat es sich gezeigt, dass die Bitumenformulierung durch die Ettringit-Komponente, die offensichtlich als Emulgator wirkt, nicht nur stabilisiert wird, sondern in sehr kurzer Zeit ihre vollen Trocken- und Verfilmungseigenschaften entwickelt, was sich insbesondere bei der einschlägigen Verwendung der Bitumenformulierung bspw. als Dickbeschichtung positiv auf die Produkteigenschaften auswirkt. Entsprechend betrifft die vorliegende Erfindung auch die Verwendung von Ettringit bzw. Ettringitbildnern als Stabilisierungsmittel in Bitumenformulierungen.

Besonders bewährt hat sich in der Praxis eine Bitumenformulierung, die bezogen auf das Gesamtgewicht der Bitumenformulierung a) 20 bis 79,5 Gew.-% Bitumen(-Mischung), b) 0,5 bis 60 Gew.-% der Ettringit-Komponente, c) 20 bis 79,5 Gew.-% Wasser, und. d) 0 bis 10 Gew.-% eines Formulierungshilfsmittels enthält.

Im System der beanspruchten Bitumenformulierung haben sich gemäß Erfindung als Bitumen bzw. Bitumenmischungen Bitumen oder/und modifizierte Bitumen als geeignet erwiesen, die insbesondere einen Erweichungspunkt von 30 bis 110 °C (entsprechend DIN 52010) aufweisen, wobei ein Bereich zwischen 40 und 60 °C besonders zu empfehlen ist.

In der Praxis hat es sich als sehr vorteilhaft erwiesen, der Bitumenformulierung, bezogen auf ihr Gesamtgewicht, die Ettringit-Komponente b) in Mengen von 0,5 bis 40 Gew.-% und insbesondere 2 bis 15 Gew.-% zuzusetzen, wobei die Ettringit-Komponente entweder als synthetisch hergestelltes Produkt oder aber auch als Ettringitbildner, z. B. in Form von Aluminium-, Calcium- und Sulfatquellen vorliegen kann, was die Erfindung ebenfalls berücksichtigt.

Typische und gemäß vorliegender Erfindung besonders geeignete Ettringitbildner sind Tonerdezement, Metakaolin, Gips, Kalk und/oder lösliche sulfathaltige Salze ein- bis dreiwertiger Kationen, wie z. B. Aluminiumsulfat.

Als entscheidender Vorteil der beanspruchten Bitumenformulierung ist die Variante mit dem Formulierungshilfsmittel d) zu betrachten, wofür die Erfindung in vorteilhafter Weise eines aus der Reihe sulfonierte Naphthalin- oder Melamin- oder Keton-Formaldehyd-Kondensationsprodukte, Polycarboxylate, Polyacrylate, Propfpolymere vom Typ MSA-PPG und/oder MSA-PEG, Kolophonium und dessen Derivate, Sulfonate und Amine des Lignin, EO-PO-Blockcopolymere, Polyphosphate, Phosphonate, Hydroxycarboxylate, Tallöl und dessen Derivate, Hydroxycarbonsäuren, Fettsäuren und deren Derivate, Acrylacylsulfonate sowie Betaine und deren beliebige Mischungen vorsieht.

Als sehr günstig hat es sich auch erwiesen, wenn als Formulierungshilfsmittel d) Maleinsäurecopolymere wie MSA-Vinylether-Copolymere und Maleinsäure-Vinylether-Acrylsäure-Polymere eingesetzt werden.

Besonders günstige Eigenschaften weisen die erfindungsgemäßen Bitumenformulierungen auf, wenn sie die fakultative Komponente d), also das Formulierungshilfsmittel, in Anteilen von 0,05 bis 2 Gew.-% und insbesondere in Anteilen von 0,1 Gew.-%, bezogen auf das Gesamtgewicht der Bitumenformulierung, enthalten.

Neben der eigentlichen erfindungsgemäßen Bitumenformulierung sieht die vorliegende Erfindung auch ein dafür besonders geeignetes Herstellungsverfahren vor, das verhältnismäßig einfach durchzuführen ist, indem die Komponente a) bei 100 bis 150 °C mit einer wässrigen Suspension der Komponenten b), deren Temperatur 45 bis 95 °C betragen sollte, in Dissolvern oder Kolloidmühlen vermischt wird. Ggf. wird die Komponente d) dabei entweder noch vor der Zugabe von Komponente a) zugesetzt, zeitgleich oder hinterher. Die Menge des Wassers wird den gewünschten Konzentrationen angepasst, wobei dessen Menge natürlich je nach Bedarf in den festgelegten Bereichen variieren kann.

In jedem Fall erhält man damit eine Bitumenemulsion, in der im Unterschied zu den klassischen organischen Emulsionen das Bitumen durch Ettringit, der wie ein anorganischer Emulgator wirkt, stabilisiert wird.

Dieser emulgierende Effekt des Ettringits kann erfindungsgemäß durch den Zusatz des beschriebenen Formulierungshilfsmittels d) noch verbessert werden.

Das beschriebene Emulgatorsystem bewirkt zusätzlich einen Viskositätsaufbau in Form einer thixotropen Struktur, die für die Verarbeitung sehr erwünscht ist. Dadurch kann bei der erfindungsgemäßen Verwendung der Bitumenformulierung für Bitumendickbeschichtungen weitestgehend auf organische oder anorganische Verdicker verzichtet werden.

Die erfindungsgemäße wässrige, einkomponentige Bitumenformulierung ist daher aufgrund ihrer Eigenschaften besonders zur Herstellung von Bitumendickbeschichtungen zum Abdichten von Bauteilen gegenüber Bodenfeuchte und/oder (nicht-)drückendem Wasser oder zum Überbrücken von Rissen, vorzugsweise mit einer Breite ≤ 2 mm, geeignet, was in vorteilhafter Weise gemeinsam mit 1 bis 20 Gew.-% an qualitätsverbessernden Zusätzen, wie anorganischen und/oder organischen Verdickungsmitteln, wie z. B. Bentonit-Systemen oder Polyurethan-Verdickern, anorganischen und/oder organischen Fasern, wie z. B. Wollastonit- oder Polypropylenfasern, Weichmachern, wie z. B. Mineralöle, Polymeren und Copolymeren auch in Form von Dispersionen auf z. B. Styrol-Butadien- oder Acrylatbasis, und/oder Leichtfüllstoffen geschieht. Geeignete Leichtfüllstoffe stellen dabei gemäß vorliegender Erfindung vor allem Polystyrolkugeln mit einer Teilchengröße ≤ 2 mm dar.

Durch den speziellen Aufbau trocknen die auf den erfindungsgemäßen Bitumenformulierungen basierenden Dickbeschichtungen nach einem völlig anderen Mechanismus als herkömmliche Bitumendickbeschichtungen: Zu Beginn der Trocknung nämlich verdampft im Verlauf einer physikalischen Trocknung Emulsionswasser. Dabei bildet sich durch den speziellen Aufbau der Bitumenemulsion an deren Oberfläche kein geschlossener Film, der die Diffusion des Wassers behindert; das Verdampfen eines Teils des Wassers führt im vorliegenden Fall zu einer Deaktivierung des Emulgators und bewirkt dadurch eine Beschleunigung der Trocknung. Das Emulsionswasser wird dabei nach außen abgeschieden.

Die bereits beschriebene Deaktivierung der Emulgatorkomponente führt im Ergebnis zu einer sehr frühen Wasserbeständigkeit, da ab diesem Zeitpunkt keine Reemulgierung mehr auftreten kann. Durch die schnellere Wasserabgabe wird zusätzlich die Verfilmung der Bitumentröpfchen, die zum Erreichen der vollständigen Funktionsfähigkeit notwendig ist, früher eingeleitet und dadurch auch schneller abgeschlossen.

Neben der Verwendung als Bitumendickbeschichtung sieht die vorliegende Erfindung aufgrund der überaus positiven Eigenschaften der Bitumenformulierung ebenfalls vor, diese für Binde-, Klebe-, Verfestigungs- und Isoliermaterialien zu verwenden.

Die geschilderten Vorteile der erfindungsgemäßen wäßrigen, einkomponentigen Bitumenformulierung werden durch die nachfolgenden Beispiele verdeutlicht.

Kurze Beschreibung der Zeichnungen

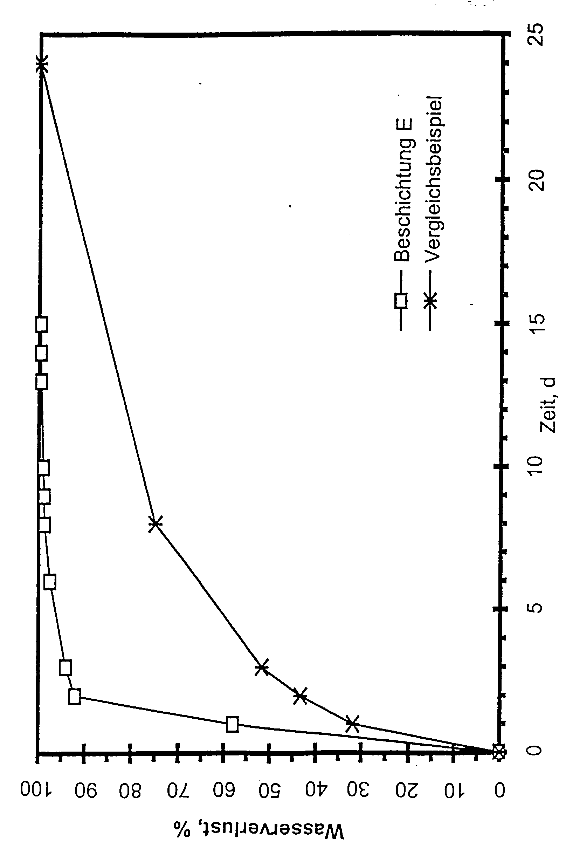

Abbildung 1 stellt den prozentualen Wasserverlust der Dickbeschichtung E und des Vergleichsbeispiels, wie in den Beispielen beschrieben, als Funktion der Trocknungszeit dar.

Beispiele

I. Herstellung wässriger, einkomponentiger Bitumenformulierungen gemäß Erfindung:

Beispiel 1

In einem Dissolver wurden 4 Gew.-Teile Tonerdezement, 6 Gew.-Teile Gips, 4 Gew.-Teile Branntkalk, 45,5 Gew.-Teile Wasser und 0,5 Gew.-Teile eines MSA-Vinylethercopolymeren (Melflux® 1641, SKW Trostberg AG) vorgelegt und auf 55 °C temperiert. Anschließend wurden 40 Gew.-Teile eines auf 130 °C temperierten B80E Destillationsbitumens unter starkem Rühren zugegeben und homogen vermischt. Nach der Zugabe wurde die Emulsion 10 Minuten nachgerührt.

Beispiel 2

In einem Dissolver wurden 6 Gew.-Teile Aluminiumsulfat-Octadecahydrat und 6 Gew.-Teile Calciumhydroxid, 37,5 Gew.-Teile Wasser und 0,5 Gew.-Teile eines MSA-Vinylethercopolymeren (Melflux® 1641, SKW Trostberg AG) vorgelegt und auf 55 °C temperiert. Anschließend wurden 50 Gew.-Teile eines auf 130 °C temperierten B80E Destillationsbitumens unter starkem Rühren zugegeben und homogen vermischt. Nach der Zugabe wurde die Emulsion 10 Minuten nachgerührt.

Beispiel 3

In einem Dissolver wurden 12 Gew.-Teile eines synthetischen Ettringits (Casul®, Fa. Rethmann) in 47,5 Gew.-Teile Wasser aufgeschlämmt. Zu dieser Vorlage wurden 0,5 Gew.-Teile eines MSA-Vinylethercopolymeren (Melflux® 1641, SKW Trostberg AG) gegeben und die Mischung wurde auf 55 °C temperiert. Anschließend wurden 40 Gew.-Teile eines auf 130 °C temperierten B80E Destillationsbitumens unter starkem Rühren zugegeben und homogen vermischt. Nach der Zugabe wurde die Emulsion 10 Minuten nachgerührt.

Beispiel 4

4 Gew.-Teile Tonerdezement, 6 Gew.-Teile Gips, 4 Gew.-Teile Branntkalk und 0,5 Gew.-Teile eines MSA-Vinylethercopolymeren (Melflux® 1641, SKW Trostberg AG) wurden mit 45,5 Gew.-Teilen Wasser vermischt und auf 55 °C temperiert. Die Mischung wurde in eine Kolloidmühle eingeführt und mit 40 Gew.-Teilen eines auf 130 °C temperierten B80E Destillationsbitumens homogenisiert. Es wurde eine Bitumenformulierung erhalten, die in Form, Farbe und Konsistenz mit der aus Beispiel 1 identisch war.

II. Herstellung von Dickbeschichtungen

Erfindungsgemäße Beschichtung E:

98,4 Gew.-Teile der gemäß Beispiel 1 erhaltenen Bitumenemulsion wurden mit 1,0 Gew.-Teilen Polystyrolkugeln einer Teilchengröße ≤ 2 mm, 0,6 Gew.-Teilen Polypropylen-Spleissfasern mit einer Faserlänge von 3 mm und 6 Gew.-Teilen einer Chloropren-Dispersion vermischt.

Vergleichsbeispiel

Herstellung einer Bitumendickbeschichtung mit einer organischen Bitumenemulsion

91,9 % einer anionischen organischen Bitumenemulsion wurden mit 1,0 Gew.-Teilen Polystyrolkugeln einer Teilchengröße ≤ 2 mm, 0,6 Gew.-Teilen Polypropylen-Spleissfasern mit einer Faserlänge von 3 mm, 0,5 Gew.-Teilen eines
Polyacrylatverdickers und 6 Gew.-Teilen einer Chloropren-Dispersion vermischt.

III. Untersuchung der Funktionsfähigkeit der Bitumendickbeschichtung E und der gemäß Vergleichsbeispiel

Zur Untersuchung der Funktionsfähigkeit der Bitumendickbeschichtung gemäß Beispiel II1 und II2 wurden jeweils Probekörper mit einer konstanten Nassschichtdicke von 6 mm auf einer wasserundurchlässigen Polypropylenfolie aufgezogen. Der Trocknungsverlauf wurde über die Wasserabgabe gravimetrisch bestimmt; die Verfilmung wurde an separaten Probekörpern durch Einschneiden und visuelle Beurteilung bestimmt. Die Lagerung wurde bei Normklima (23 °C und 50 % rel. Luftfeuchte) durchgeführt.
Die Abbildung 1 dokumentiert den jeweiligen Trocknungsverlauf der Dickbeschichtung E und den des Vergleichsbeispiels:
Verfilmung der Dickbeschichtung E und der des Vergleichsbeispiels:

| Zeit | 1 d | 2 d | 3 d | 4 d | 7 d |
|---|---|---|---|---|---|
| Verfilmung [%] | | | | | |
| Beschichtung E | 50 | 90 | 100 | - | - |
| Vergleichsbeispiel | 10 | 40 | 50 | 75 | 100 |

Beurteilung der Ergebnisse:

Wasserverlust: Beschichtung E trocknet wesentlich schneller als die des Vergleichsbeispiels. Bereits nach 2 Tagen lag der Wasserverlust der Beschichtung E bei > 90 % der
Gesamtabgabemenge. Bei dem Vergleichsbeispiel waren zu diesem Zeitpunkt erst 43 % Wasser abgegeben worden.
Funktionsfähigkeit: Die Funktionsfähigkeit (vollständige Verfilmung) wurde bei Beschichtung E schon nach 3 Tagen beobachtet, das Vergleichsbeispiel erreichte diesen Zustand erst nach 7 Tagen.

**Patentansprüche**

1. Wässrige, einkomponentige Bitumenformulierung, dadurch gekennzeichnet, dass sie Ettringit oder/und Ettringitbildner enthält.

2. Bitumenformulierung nach Anspruch 1, dadurch gekennzeichnet, dass sie jeweils bezogen auf das Gesamtgewicht der Bitumenformulierung

   20 bis 79,5 Gew.% Bitumen(-Mischung),
   0,5 bis 60 Gew.% der Ettringit-Komponente(n),
   20 bis 79,5 Gew.% Wasser und
   0 bis 10 Gew.% eines Formulierungshilfsmittels enthält.

3. Bitumenformulierung nach den Ansprüchen 1 und 2, dadurch gekennzeichnet, dass sie Bitumen und/oder modifizierte Bitumen, insbesondere mit einem Erweichungspunkt von 30 bis 110°C (DIN 52010) enthält.

4. Bitumenformulierung nach den Ansprüchen 1 bis 3, dadurch gekennzeichnet, dass sie als Ettringit-Komponente (n) synthetischen Ettringit oder/und als Ettringitbildner Aluminium-, Calcium- und Sulfatquellen, vorzugsweise in einem Gesamtanteil der Ettringit-Komponente(n) von 0,5 bis 40 und insbesondere 2 bis 15 Gew.%, bezogen auf das Gesamtgewicht der Bitumenformulierung, enthält.

5. Bitumenformulierung nach Anspruch 4, dadurch gekennzeichnet, dass die Ettringitbildner ausgewählt werden aus Tonerdezement, Metakaolin, Gips, Kalk und löslichen sulfathaltigen Salzen ein- bis dreiwertiger Kationen.

6. Bitumenformulierung nach den Ansprüchen 2 bis 5, dadurch gekennzeichnet, dass sie die Komponente d) in Anteilen von 0,05 bis 2 Gew.% und insbesondere in Anteilen von 0,1 Gew.%, bezogen auf das Gesamtgewicht der Bitumenformulierung, enthält.

7. Bitumenformulierung nach den Ansprüchen 2 bis 6, dadurch gekennzeichnet, dass das Formulierungshilfsmittel d) ausgewählt ist aus der Reihe sulfonierte Naphthalin- oder Melamin- oder Keton-Formaldehyd-Kondensationsprodukte, Polycarboxylate, Polyacrylate, Propfpolymere vom Typ MSA-PPG und/oder MSA-PEG, Kolophonium und dessen Derivate, Sulfonate und Amine des Lignin, EO-PO-Blockcopolymere, Polyphosphate, Phosphonate, Hydroxcarboxylate, Tallöl und dessen Derivate, Hydroxycarbonsäuren, Fettsäuren und deren Derivate, Acrylacylsulfonate, Betaine und deren beliebige Mischungen.

8. Bitumenformulierung nach den Ansprüchen 2 bis 6, dadurch gekennzeichnet, dass das Formulierungshilfsmittel d) Maleinsäurepolymere wie MSA-Vinylether-Copolymere und Maleinsäure-Vinylether-Acrylsäure-Polymere enthält.

9. Verfahren zur Herstellung der Bitumenformulierung nach den Ansprüchen 2 bis 8, dadurch gekennzeichnet, dass die Komponente a) bei 100 bis 150°C zu einer wässrigen Zubereitung der Komponente b) in Dissolvern oder Kolloidmühlen gegeben wird und ggf. die Komponente d) vor, mit und/oder nach der Zugabe der Komponente a) zugesetzt wird.

10. Verwendung der Bitumenformulierung nach den Ansprüchen 1 bis 8 für Binde-, Klebe-, Verfestigungs- und Isoliermaterialien.

11. Bitumendickbeschichtung, enthaltend eine Bitumenformulierung nach den Ansprüchen 1 bis 8.

12. Bitumendickbeschichtung nach Anspruch 11, die weiter, bezogen auf das Gesamtgewicht der Bitumendickbeschichtung, 1 bis 20 Gew.% an Zusatzstoffen enthält, die ausgewählt sind aus anorganischen Verdickungsmitteln, anorganischen und/oder organischen Fasern, Weichmachern, Polymeren, Copolymeren und Leichtfüllstoffen.

13. Bitumendickbeschichtung nach Anspruch 12, wobei die Leichtfüllstoffe Polystyrol-Kugeln mit einer Teilchengröße $\leq$ 2 mm sind.

**14.** Verwendung einer Bitumendickbeschichtung nach den Ansprüchen 11 bis 13 zum Abdichten von Bauteilen gegenüber Bodenfeuchte und/oder (nicht-)drückendem Wasser oder zum Überbrücken von Rissen.

EP 1 099 724 A2